(19) Europäisches Patentamt
European Patent Office
Office européen des brevets

(11) Publication number: **0 215 393**
**B1**

(12) # EUROPEAN PATENT SPECIFICATION

(45) Date of publication of patent specification: **28.11.90**

(51) Int. Cl.[5]: **C 07 C 15/00,** A 61 K 31/28

(21) Application number: **86112285.1**

(22) Date of filing: **05.09.86**

(60) **Divisional application 88106222 filed on 19.04.88.**

(54) **Platinum(II) complexes of 1,1-cyclobutane-dicarboxylate, a process for preparing them and pharmaceutical compositions containing them.**

(30) Priority: **05.09.85 ES 547481**
**23.10.85 ES 548849**

(43) Date of publication of application:
**25.03.87 Bulletin 87/13**

(45) Publication of the grant of the patent:
**28.11.90 Bulletin 90/48**

(84) Designated Contracting States:
**BE CH DE FR GB IT LI NL**

(56) References cited:
**EP-A-0 147 926**
**US-A-4 140 707**

**J. CHEM.SOC. DALTON, 1973, pages 2021-2028, London, GB; J. CHATT et al.: "Rhodium(I), rhodium(III), palladium(II), and platinum(II) complexes containing ligands of the type PRnQ3-n (n=0,1 or 2; R=Me, Et, BUt or Ph; Q=CH2OCOMe or CH2OH)"**

(73) Proprietor: **FERRER INTERNACIONAL, S.A.**
**Gran Via Carlos III, 94**
**08028 Barcelona (ES)**

(72) Inventor: **Foguet, Rafael**
**Llusanés 8**
**E-08022 Barcelona (ES)**
Inventor: **Sampedro, Federico**
**Francia 18-20**
**E-08024 Barcelona (ES)**
Inventor: **Ortiz, José A.**
**Córcega 429**
**E-08037 Barcelona (ES)**
Inventor: **Cayuela Salvador**
**Loreto 46**
**E-08029 Barcelona (ES)**
Inventor: **Castelló Josep M.**
**Princep d'Asturias 35**
**E-08012 Barcelona (ES)**
Inventor: **de Andrés, Luis**
**Tarragona 40**
**El Papiol (Barcelona) (ES)**
Inventor: **Bonal Joaquîn**
**Reus 26**
**E-08022 Barcelona (ES)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 215 393 B1**

(74) Representative: Kinzebach, Werner, Dr.
Patentanwälte Reitstötter, Kinzebach und Partner Sternwartstrasse 4 Postfach 86 06 49
D-8000 München 86 (DE)

## Description

The present invention relates to platinum(II) complexes of 1,1-cyclobutane-dicarboxylate of the general formula (I):

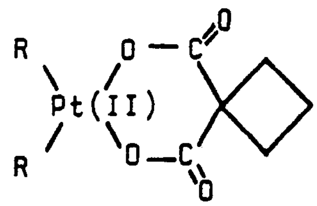

(I)

wherein R is a dialkylsulphide or trialkylphosphine group and each alkyl group may contain hydroxyl groups or not and has two carbon atoms at most, as well as to a process for preparing the same and to pharmaceutical compositions containing these compounds.

Platinum(II) complexes containing alkylphosphine ligands are disclosed in J. Chem. Soc. Dalton 1973, 2021—2028 by J. Chatt et al. and are investigated for their catalytic properties for hydrogenation and isomerization of olefins.

EP—A—0 147 926 discloses an orally administrable pharmaceutical composition for the treatment of cancer, comprising for example the (1,1-cyclobutanedicarboxylato)1,2-diamino-cyclohexane platinum(II) complex.

British patent No. 1,380,228 which is regarded as closest prior art discloses, among other compounds, cis-diammine(1,1-cyclobutanedicarboxylate)platinum (Carboplatin), which is claimed to possess a remarkable antitumor activity both in man and animals. However, due to the renal toxicity of this compound as well as a marked emetic action thus involving a high risk in its human clinical use, it was necessary to find other cytostatic analoques having lower renal toxicity and better tolerance.

The compounds of the present invention are prepared, in accordance with the below scheme, from the respective cis-dichloro platinum(II) bis-substituted intermediates of the general formula (II):

$$\text{cis-}\left[Pt^{(II)}Cl_2\{R\}_2\right] \qquad (II)$$

wherein R is as defined for (I):

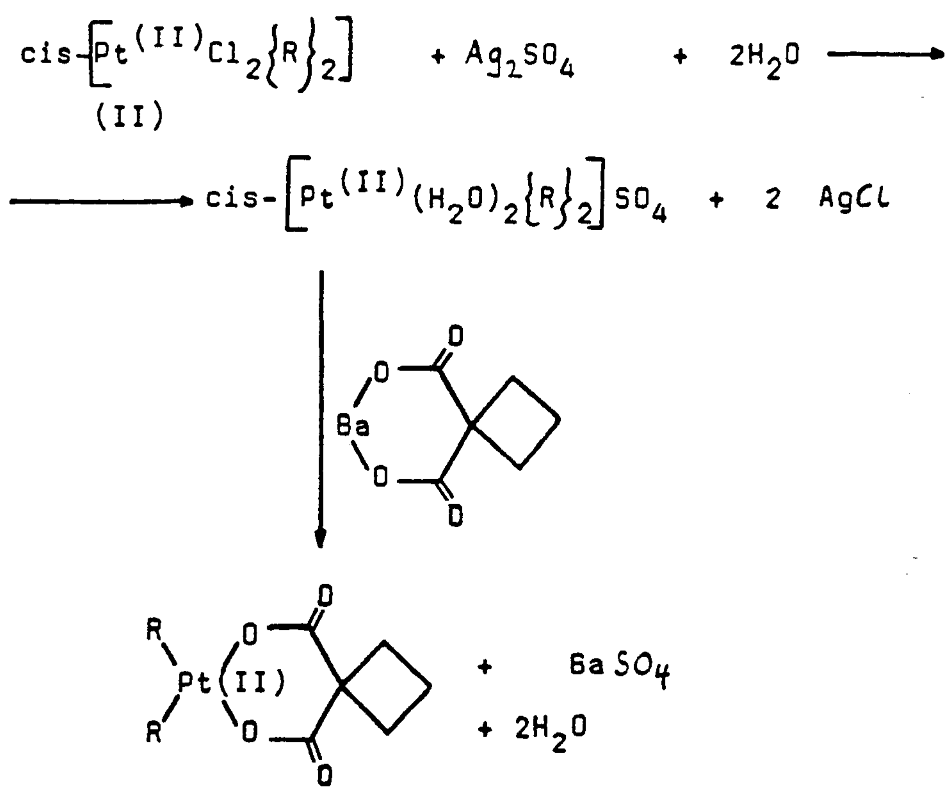

(II) (III) (IV) (I)

The above reactions occur suitably at room temperature in a single synthesis step, and no isolation of

intermediates of the general formula (III) is necessary. The end products thus obtained are isolated by removing the formed barium sulphate by filtration. Subsequent concentration and purification may be achieved by crystallization.

Respective cis-dichloro platinum(II) bis-substituted precursors of the general formula (II) are obtained by conventional methods when R is a dialkylsulphide or trialkylphosphine group without hydroxyl groups (Kauffman, GB and Cowan, DO: Inorg. Synth., (1963) *7*, 239—245; Kauffman, GB and Cowan, DO: Ibid, (1960) *6*, 211—215; Parshall, GW: Ibid, (1970) *12*, 26—33) according to the following reactions:

$$Pt \xrightarrow[NO_3H]{HCl} H_2PtCl_6 + \text{nitrous gases}$$

$$H_2PtCl_6 + KCl \longrightarrow K_2PtCl_6 + HCl$$

$$K_2PtCl_6 + C_2O_4K_2 \longrightarrow K_2PtCl_4 + 2CO_2 + 2KCl$$

$$K_2PtCl_4 + 2(H_5C_2)_2S \longrightarrow \text{trans-}\left[PtCl_2\{(H_5C_2)_2S\}_2\right] + 2KCl$$

$$\text{trans-}\left[PtCl_2\{(H_5C_2)\}_2\right] + 2(H_5C_2)_2S \longrightarrow \left[Pt\{(H_5C_2)_2S\}_4\right] Cl_2$$

$$\left[Pt\{(H_5C_2)_2S\}_4\right]Cl_2 \longrightarrow \text{cis-}\left[PtCl_2\{(H_5C_2)_2S\}_2\right] + 2(H_5C_2)_2S$$

$$K_2PtCl_4 + 2(H_5C_2)_3P \longrightarrow \text{cis-}\left[PtCl_2\{(H_5C_2)_3P\}_2\right] + 2KCl$$

Applicants have found out that the compounds of general formula (I) show significant advantages over Carboplatin with regard to their increased liposolubility and lasting hydrosolubility, thus providing a composition suitable for oral administration and administration by injection. Therefore, the compounds of the present invention are useful as a medication in the treatment of tumors and may be administered, mixed with suitable carriers, orally in the form of tablets, capsules, coated-tablets, granules, syrup, solution, etc., or by injection, at daily doses ranging from 10 to 600 mg/$m^2$.

A number of examples will now be described in non-limitative manner to illustrate the invention.

### Example 1

Platinum(II) bis-(diethylsulphide-1,1-cyclobutane-dicarboxylate

(I, R= $(H_5C_2)_2S$)

2.00 g (4.48 mmole) of platinum(II) cis-dichloro-bis(diethylsulphide) (II, R= $(H_5C_2)_2S$) are added to a solution containing 1.39 g (4.45 mmole) of $Ag_2SO_4$ in 200 ml of water. The mixture is stirred for 4 hours under light protection, filtered off and concentrated to 120 ml. Barium 1,1-cyclobutane-dicarboxylate is prepared by adding 1.41 g (4.47 mmole) of $Ba(OH)_2.8H_2O$ to a solution containing 0.74 g (5.13 mmole) of 1,1-cyclobutane-dicarboxylic acid in 80 ml of water. Both solutions are mixed and $BaSO_4$ precipitates. The mixture is then filtered off and concentrated to give white crystals. By crystallization from acetone, 1.72 g of platinum(II) bis-(diethylsulphide)-1,1-cyclobutane-dicarboxylate (I, R= $(H_5C_2)_2S$) are obtained.

Melting point: 179—180°C.

Yield: 74%.

IR Spectrum (KBr), $cm^{-1}$: 2980—2940, 1670, 1630, 1330, 1110, 900, 790, 470.

NMR Spectrum ($D_2O$) δ: 3.3—2.65 (m), 2.1—1.75 (m), 3.4 (t) J=7Hz.

### Example 2

Platinum(II) bis-(triethylphosphine)-1,1-cyclobutane-dicarboxylate

(I, R= $(H_5C_2)_3P$)

0.62 g (1.23 mmole) of platinum(II) cis-dichloro-bis-(triethylphosphine) (II, R= $(H_5C_2)_3P$) are added to a solution containing 0.37 g (1.18 mmole) of $Ag_2SO_4$ in 50 ml of water. The mixture is stirred for 4 hours under light protection, filtered off and concentrated to 30 ml. Barium 1,1-cyclobutane-dicarboxylate is

prepared by adding 0.38 g (1.20 mmole) of Ba(OH).$8H_2O$ to a solution containing 0.2 g (1.38 mmole) of 1,1-cyclobutane-dicarboxylic acid in 20 ml of water. Both solutions are mixed and $BaSO_4$ precipitates. The mixture is then filtered off and concentrated to give white crystals. By crystallization from ethanol, 0.56 g of platinum(II) bis-(triethylphosphine)-1,1-cyclobutane-dicarboxylate (I, R= $(H_5C_2)_3P$) are obtained.

Melting point: 201—203°C.
Yield: 80%.
IR Spectrum (KBr), $cm^{-1}$: 2960, 2940, 2880, 1650, 1620, 1350, 1115, 1038, 750, 455.
NMR Spectrum ($CDCl_3$) δ: 2.85 (t) J=7Hz, 2.1—1.55 (m), 1.3—0.95 (m).

Example 3

Platinum(II) bis-(trishydroxymethylphosphine)-1,1-cyclobutane-dicarboxylate

(I, R= $(HOCH_2)_3P$)

1.36 g (2.64 mmole) of platinum(II) cis-dichloro-bis-(trishydroxymethylphosphine) (II, R= $(HOCH_2)_3P$) are dissolved in 25 ml of water and added to a solution containing 0.82 g (2.63 mmole) of $Ag_2SO_4$ in 85 ml of water. The mixtured is then stirred, filtered off and concentrated to 65 ml. Barium 1,1-cyclobutane-dicarboxylate is prepared by adding 0.84 g (2.66 mmole) of $Ba(OH_2)$.$8H_2O$ to a solution containing 0.44 g (3.05 mmole) of 1,1-cyclobutane-dicarboxylic acid in 45 ml of water. Both solutions are mixed and $BaSO_4$ precipitates. The mixture is filtered off and concentrated to nearly dryness. Absolute ethanol is added and allowed to precipitate. Then, it is filtered again and dried. 1.21 g of platinum(II) bis-(trishydroxymethylphosphine)-1,1-cyclobutane-dicarboxylate (I, R= $(HOCH_2)_3P$) are obtained.

Melting point: 128—132°C (d).
Yield: 78%.
IR Spectrum (KBr), $cm^{-1}$: 3600—2700, 1650, 1580, 1400, 1030, 900, 780, 450.
NMR Spectrum ($D_2O$) δ: 4.25 (t) J=24.4Hz; 2.8—2.0 (m), 1.9—1.5 (m).

Preparation of the Educt of Example 3

Platinum(II) cis-dichloro-bis-(trishydroxymethyl)-phosphine)

(II, R= $(HOCH_2)_3P$)

2.5 g (6.0 mmole) of potassium tetrachloroplatinite ($K_2PtCl_4$) are dissolved in 40 ml of water and filtered off. To the red filtrate, 60 ml of glacial acetic acid and 2.5 ml (20 mmole) of 1,5-cyclooctadiene are added. The mixture is immediately stirred and heated at nearly 90°C in a water bath. After 30 minutes approximately, the red solution slowly becomes light yellow and fine crystals are formed. The solution volume is reduced to about 30 ml by evaporation under reduced pressure. Light yellow needles are collected and washed successively with 50 ml of water, ethanol and ether. After drying for 1 hour at 100°C, 2.16 g of platinum(II) dichloro(1,5-cyclooctadiene) are obtained which decomposes without melting between 250 and 280°C.

4.60 g (12.29 mmole) of platinum(II) dichloro(1,5-cyclooctadiene) in 100 ml of ethanol are stirred and added to 3.92 g (31.59 mmole) of 95% tris(hydroxymethyl)phosphine dissolved in 200 ml of ethanol:methanol (1:3) under nitrogen atmosphere. The mixture is stirred until all solids have dissolved, filtered off and concentrated to dryness, then washed with carbon tetrachloride. Finally, the mixture is treated with absolute ethanol to remove any unreacted phosphine residue. 3.5 g of platinum(II) cis-dichloro-bis(tris(hydroxymethyl)phosphine) (II, R= $(HOCH_2)_3P$) are obtained.

Melting point: 122—126°C.
Yield: 55%%.
IR Spectrum (KBr), $cm^{-1}$: 3500—3000, 1360, 1020.
NMR Spectrum ($D_2O$) δ: 4.39 (t) J=24.41Hz.

**Claims**

1. Platinum(II) complexes of 1,1-cyclobutane-dicarboxylate of the general formula (I):

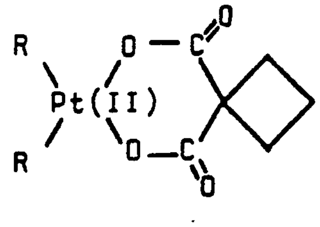

(I)

wherein R is a dialkylsulphide or trialkylphosphine group and each alkyl group may contain hydroxyl groups or not and has two carbon atoms at most.

2. A process for preparing the compounds according to Claim 1, characterized in that a compound of general formula (II):

$$cis\text{-}\left[Pt^{(II)}Cl_2\{R\}_2\right] \qquad (II)$$

wherein R is as defined for (I), is reacted with silver sulphate in aqueous solution and subsequent reaction with an aqueous solution of barium 1,1-cyclobutane-dicarboxylate.

3. The compounds of claim 1 for use in a method for treatment of the human and animal body.

4. Pharmaceutical compositions comprising at least one of the compounds of Claim 1, optionally together with pharmaceutical carriers and/or adjuvants.

5. The use of the compounds according to Claim 1 for the preparation of pharmaceutical compositions for treating tumor diseases.

**Patentansprüche**

1. Platin(II)-Komplexe von 1,1-Cyclobutan-dicarboxylat der allgemeinen Formel I:

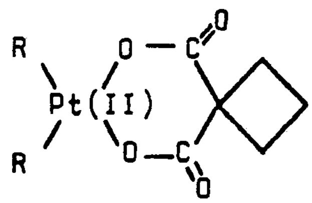

(I)

worin R für eine Dialkylsulfid- oder Trialkylphosphin-Gruppe steht und jede Alkylgruppe Hydroxylgruppen aufweisen kann und höchstens zwei Kohlenstoffatome besitzt.

2. Verfahren zur Herstellung der Verbindungen nach Anspruch 1, dadurch gekennzeichnet, daß eine Verbindung der allgemeinen Formel II:

$$cis\text{-}\left[Pt^{(II)}Cl_2\{R\}_2\right] \qquad (II)$$

worin R wie in I definiert ist, mit Silbersulfat in einer wässrigen Lösung, und anschließend mit einer wässrigen Lösung von Barium-1,1-Cyclobutan-dicarboxylat umgesetzt wird.

3. Verbindungen nach Anspruch 1 zur Verwendung in einem Verfahren zur Behandlung des Körpers bei Mensch und Tier.

4. Pharmazeutische Zusammensetzungen, die mindestens eine der Verbindungen nach Anspruch 1 enthalten, gegebenenfalls zusammen mit pharmazeutischen Trägern und/oder Adjuvantien.

5. Verwendung der Verbindungen nach Anspruch 1 zur Herstellung pharmazeutischer Zusammensetzungen zur Behandlung von Tumorkrankheiten.

**Revendications**

1. Complexes platine (II) 1,1-cyclobutane-dicarboxylate de la formule générale (I):

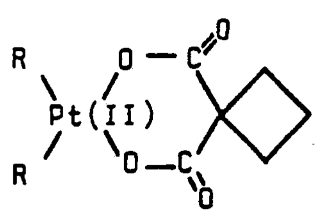

(I)

où R est un groupe dialkylsulfure ou trialkylphosphine, où chaque groupe alkyle peut contenir ou non des groupes hydroxyle et où chaque groupe alkyle comprend au plus deux atomes de carbone.

2. Procédé pour préparer les composés selon la revendication 1, caractérisé en ce qu'on fait réagir un composé de formule générale (II)

$$cis\text{-}\left[Pt^{(II)}Cl_2\{R\}_2\right] \qquad (II)$$

où R est défini comme pour (I), avec du sulfate d'argent dans une solution aqueuse, puis on fait réagir avec une solution aqueuse de baryum 1,1-cyclobutane-dicarboxylate.

3. Composés selon la revendication 1 utilisés dans une méthode de traitement du corps de l'homme et de l'animal.

4. Compositions pharmaceutiques comprenant au moins un des composé de la revendication 1, le case échéant avec des vecteurs pharmaceutiques et/ou des adjuvants.

5. L'utilisation des composés selon la revendication 1 pour la préparation de compositions pharmaceutiques pour traiter des maladies tumorales.